**Europäisches Patentamt**

**European Patent Office**

**Office européen des brevets**

(11) Veröffentlichungsnummer: **0 362 607**

**A2**

## EUROPÄISCHE PATENTANMELDUNG

(21) Anmeldenummer: **89117181.1**

(22) Anmeldetag: **16.09.89**

(51) Int. Cl.5: **C01B 17/52**

(30) Priorität: **01.10.88 DE 3833381**

(43) Veröffentlichungstag der Anmeldung:
**11.04.90 Patentblatt 90/15**

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Lailach, Günter, Dr.**
**Bismarckstrasse 109**
**D-4150 Krefeld(DE)**
Erfinder: **Rens, Wolfgang**
**Wolferstrasse 18**
**D-4150 Krefeld(DE)**

(54) **Verfahren zur Herstellung von Schwefeldioxid.**

(57) Die vorliegende Erfindung betrifft ein Verfahren zum Herstellen von Schwefeldioxid durch Röstung von Flotationskies in Wirbelschichtreaktoren, wobei der Flotationskies in Gegenwart von Eisen(III)-sulfat geröstet wird.

EP 0 362 607 A2

## Verfahren zur Herstellung von Schwefeldioxid

Die Erfindung betrifft ein Verfahren zum Herstellen von Schwefeldioxid durch Röstung von Flotationskies in Wirbelschichtreaktoren.

Aus Ullmanns Enzyklopädie der technischen Chemie. Band 21. 4. Auflage, 1982, Verlag Chemie, Weinheim sowie Sulphur, Sulphur Dioxide and Sulphuric Acid, 1984. The British Sulphur Corporation Ltd.. Seiten 179 ff. ist es bekannt, Schwefeldioxid dadurch herzustellen, daß man Schwefelkies, vorzugsweise in Wirbelbettreaktoren, mit Luft bei 800 bis 1100° C verbrennt unter Bildung von vorwiegend Eisenoxid enthaltendem Abbrand und Schwefeldioxid. Die Kiesröstung bereitet dabei keine Probleme, wenn Schwefelkies mit Korngrößen von 0,1 bis 5 mm. sog. Feinkies, als schwefelhaltiger Rohstoff eingesetzt wird. Derartige Kiese mit ausreichender Qualität sind aber kaum noch verfügbar. Es muß deshalb auf Schwefelkies zurückgegriffen werden, der im Rahmen der Aufbereitung durch Flotation auf Korngrößen unter 0,1 mm zerkleinert wurde. häufig mit erheblichen Anteilen unter 0,04 mm.

Die Röstung des Schwefelkieses im Wirbelbettreaktor hat aber zur Voraussetzung, daß ständig ein Wirbelbett aus Abbrandteilchen aufrecht erhalten wird, in dem die Verbrennungsreaktion abläuft. Der Abbrand, der die stationäre Wirbelschicht bildet, sollte ein breites Kornspektrum von 0,05 bis 5 mm aufweisen, um ein gutes Wirbelverhalten zu gewährleisten.

Bei der Verarbeitung von Flotationskies entsteht bei der Verbrennung der feinkörnigen Pyritteilchen ein sehr feinteiliger Abbrand, der mit dem Gasstrom aus dem Reaktor ausgetragen wird. Die Problematik des Prozesses liegt darin, daß der das stationäre Wirbelbett bildende Abbrand durch Abrieb in seiner Menge abnimmt und deshalb durch Bildung grober Partikel bei der Pyritröstung wieder ersetzt werden muß.

Um sowohl den Abrieb gering zu halten als auch die Verweilzeit des Materials im Wirbelbett und damit die Wahrscheinlichkeit der Bildung grober Partikel zu erhöhen, wird üblicherweise die Gasgeschwindigkeit in den Reaktoren von 0,8 bis 2,5 m/s (bezogen auf den leeren Raum bei 850° C und 1 bara) bei Feinkiesröstung auf 0,2 bis 0,6 m/s bei Flotationskiesröstung gesenkt. Das führt aber zu einer deutlichen Erhöhung der spezifischen Anlagekosten oder zu gravierenden Kapazitätseinbußen bei vorhandenen Feinkiesröstanlagen.

Aufgabe dieser Erfindung ist es nun, ein Verfahren bereitzustellen, welches eine wirtschaftliche Röstung von Flotationskies in Wirbelschichtreaktoren ermöglicht, ohne die Nachteile des beschriebenen Standes der Technik aufzuweisen.

Überraschenderweise wurde nun gefunden, daß die Herstellung von Schwefeldioxid durch Wirbelbettröstung von Flotationskies mit hoher spezifischer Reaktorleistung dann durchgeführt werden kann, wenn in das Wirbelbett Eisen(III)-sulfat mit eingebracht wird.

Gegenstand dieser Erfindung ist somit ein Verfahren zum Herstellen von Schwefeldioxid durch Röstung von Flotationskies in Wirbelschichtreaktoren, wobei zusammen mit dem Flotationskies Eisen(III)-sulfat in den Wirbelschichtreaktor eingebracht wird. Durch die erfindungsgemäße Zugabe von Eisen(III)-sulfat wird die Bildung von groben Abbrandteilchen gefördert, so daß die Menge des Materials, das das Wirbelbett bildet, auch bei großer Gasgeschwinkigkeit konstant gehalten oder im Überschuß erzeugt und teilweise unten aus dem Wirbelbett abgezogen werden kann. Die Bildung von groben Abbrandteilchen kann demzufolge durch die Menge des in das Wirbelbett eingetragenen Eisen(III)-sulfats gesteuert werden. In einer bevorzugten Ausführungsform des erfindungsgemäßen Verfahrens beträgt das einzubringende Eisen(III)-sulfat 1 bis 20 Gew.-%, bevorzugt 3 bis 20 Gew.-%, bezogen auf den zu röstenden Flotationskies. Erfindungsgemäß kann das Eisen(III)-sulfat dem Schwefelkies zugemischt oder separat in das Wirbelbett eingebracht werden.

In einer weiteren bevorzugten Ausführungsform des erfindungsgemäßen Verfahrens wird das Eisen(III)-sulfat durch Reaktion von bei dem Röstprozeß erzeugtem Abbrand mit Schwefelsäure gebildet. Besonders wirtschaftlich ist es, einen Teil des bei dem Röstprozeß gebildeten Abbrandes mit Abfallschwefelsäure umzusetzen.

Sehr vorteilhaft ist die Kombination der Kiesröstung mit der thermischen Spaltung von Metallsulfaten, wobei die diesen üblicherweise anhaftende Schwefelsäure zumindest teilweise durch Reaktion mit Abbrand unter Bildung von Eisen(III)-sulfat umgesetzt wird, bevor die Metallsulfate in den Wirbelschichtreaktor eingetragen werden. Dabei ist es im Sinne der Erfindung ohne Bedeutung, ob zusätzlich andere Energieträger, wie z.B. Kohle, in den Wirbelschichtreaktor eingebracht werden.

Im folgenden wird die Erfindung beispielhaft erläutert, ohne daß hierin eine Einschränkung zu sehen ist.

### Vergleichsbeispiel

In einer Feinkiesröstanlage wurde mit einer Gasgeschwindigkeit von 1,8 m/s (bezogen auf den leeren Raum bei 950° C und 1 bar a) Flotationskies bei 950 bis 1000° C geröstet.

Kornspektrum des Schwefelkieses:
96 % < 0,1 mm, 82 % < 0,075, 58 % < 0,04 mm.

Der Schwefelkies wurde mit einem Gemisch auf Eisen(II)-, Aluminium-, Magnesium- und Titanylsulfat, das als Haftfeuchte 27 Gew.-% 65 %iger Schwefelsäure enthielt, im Gewichtsverhältnis 1:1,4 gemischt und in den Wirbelschichtreaktor eingetragen. Während des Prozesses sank der Druckverlust des Gases beim Durchströmen des Reaktors infolge Abriebs der das Wirbelbett bildenden groben Abbrandteilchen laufend ab. Ein stationärer Zustand konnte nur durch Zugabe von Feinkies (5 bis 10 % des Kieseinsatzes) erreicht werden.

Vergleichsbeispiel 2

Zu der Mischung aus Schwefelkies und Metallsulfaten entsprechend Vergleichsbeispiel 1 wurden 10 Gew.-% Abbrand aus der Röstanlage (bezogen auf die Mischung) unmittelbar vor der Chargierung zugemischt. Dadurch wurde die Bildung von grobem Bettmaterial nicht beeinflußt. Die Probleme bei der Prozeßführung waren dieselben wie unter den Bedingungen von Vergleichsbeispiel 1.

Beispiel

25% des thermisch zu spaltenden schwefelsäurehaltigen Sulfatgemisches wurden mit Abbrand aus der Röstanlage im Gewichtsverhältnis 1:0,25 vermischt. Nach einem Tag war die Schwefelsäure weitgehend zu Eisen(III)-sulfat umgesetzt. Flotationskies, Eisen(III)-sulfatfreies Metallsulfatgemisch und Eisen(III)-sulfathaltiges Metallsulfatgemisch wurden nun im Gewichtsverhältnis 1:1,05:0,44 gemischt und in den Wirbelschichtreaktor eingetragen. Die Reaktionstemperatur lag wie in den Vergleichsbeispielen zwischen 950 und 1000° C. Der Druckverlust des Gasstromes stieg ohne Zugabe von Feinkies an und wurde durch Ablassen von Bettmaterial auf dem gewünschten Wert gehalten.

Auch bei einer Erhöhung der Gasgeschwindigkeit auf 2,2 m/s wurde noch ausreichend Bettmaterial erzeugt.

Ansprüche

1. Verfahren zum Herstellen von Schwefeldioxid durch Röstung von Flotationskies in Wirbelschichtreaktoren, dadurch gekennzeichnet, daß der Flotationskies in Gegenwart von Eisen(III)-sulfat geröstet wird.

2. Verfahren gemäß Anspruch 1, dadurch gekennzeichnet, daß die Menge des Eisen(III)-sulfats 1 bis 20 Gew.-%, bevorzugt 3 bis 20 Gew.-%, (bezogen auf den Flotationskies) beträgt.

3. Verfahren gemäß einem der Ansprüche 1 oder 2, dadurch gekennzeichnet, daß das Eisen(III)-sulfat durch Reaktion von bei dem Röstprozeß erzeugtem Abbrand mit Schwefelsäure gebildet wird.

4. Verfahren gemäß einem oder mehrerer der Ansprüche 1 bis 3, dadurch gekennzeichnet, daß das Eisen(III)-sulfat durch Reaktion von bei dem Röstprozeß erzeugtem Abbrand mit Haftsäure erzeugt wird, die den zur thermischen Spaltung in der Röstanlage vorgesehenen Metallsulfaten anhaftet.